# FASCICULE DE BREVET EUROPEEN

(11) **EP 3 089 836 B1**
(45) Date de publication et mention de la délivrance du brevet: **31.01.2018**
(21) Numéro de dépôt: 14816199.5
(22) Date de dépôt: 11.12.2014
(51) Int. Cl.: B23K 101/36, H01F 41/04, H01F 5/02, B21D 26/14, B23K 13/02, H05B 6/02

(54) **PROCÉDÉ DE FIXATION D'UNE BAGUE METALLIQUE DANS UN CADRE ET BOBINE D'INDUCTION OBTENUE PAR CE PROCÉDÉ**
VERFAHREN ZUM BEFESTIGEN EINES METALLRINGS IN EINEM RAHMEN UND DURCH DIESES VERFAHREN ERHALTENE INDUKTIONSSPULE
METHOD FOR FIXING A METAL RING IN A FRAME AND INDUCTION COIL OBTAINED BY SAID METHOD

(30) Priorité: 31.12.2013 FR 1363763
(43) Date de publication de la demande: 09.11.2016
(73) Titulaire: ADM28 S.àr.l., 2453 Luxembourg (LU)
(72) Inventeur: MANDEL, Eric, 02100 Saint-Quentin (FR)
(74) Mandataire: Cabinet BARRE LAFORGUE & associés
(86) Numéro de dépôt international: PCT/EP2014/077437
(87) Numéro de publication internationale: WO 2015/101469

(56) Documents cités:
- WO-A2-00/18526
- JP-A- S 611 486
- US-A- 3 502 837

## Description

L'invention concerne un procédé de fixation d'une bague métallique dans un cadre et en particulier l'application de ce procédé à la fabrication de bobines pour magnétoformage ou de paliers lisses. L'invention s'étend également à une bobine d'induction pour magnétoformage obtenue par ce procédé.

Les techniques de magnétoformage ou de soudage par impulsion magnétique, connues par exemple du document BE582117, permettent de façonner des métaux, voire même de les souder au moyen de déformations appliquées par une force magnéto-mécanique résultant de l'interaction entre les forces de Laplace et les courants induits générés dans une pièce métallique sous l'effet d'une brusque variation d'un champ magnétique. L'un des emplois les plus fréquents de ces techniques consiste par exemple à former des rétreints sur des pièces tubulaires comme sertir un capuchon sur un col de bouteille ou souder ensemble deux tubes concentriques. Dans ce type de procédé, on utilise une bobine d'induction, de préférence mono spire à l'intérieur de laquelle on place les pièces à déformer et on alimente la bobine par une impulsion de courant fournie par un générateur de haute puissance pulsée comme un générateur de Marx.

On a cependant noté que les forces radiales exercées sur la pièce à déformer s'accompagnaient d'une réaction sur la bobine visant à déformer celle-ci vers l'extérieur, voire à la détruire si cette réaction excède la limite élastique du matériau de la bobine. Il a donc été suggéré de fabriquer des bobines entièrement en acier, solution non satisfaisante au vu de la piètre conductivité électrique de l'acier, ou encore des bobines massives en cuivre (de coût prohibitif) ou encore des bobines associant une spire conductrice en cuivre ou autre matériau bon conducteur de l'électricité avec un cadre de maintien en matériau rigide tel que l'acier.

On connait par exemple du document US 6,137,094 une telle bobine bi-matière dans laquelle une spire conductrice en bronze au béryllium est fixée dans un cadre en acier au moyen d'un serrage par une pluralité de vis orthogonales au plan de la spire et du cadre. L'alimentation de la spire conductrice s'effectue par des bornes de connexion solidaires du cadre en acier. On a pu constater qu'une telle bobine perdait rapidement en efficacité du fait des pertes électriques au niveau de l'entrefer résiduel entre la spire et le cadre, entre les points de serrage. De plus, la présence de cet entrefer résiduel entraine la formation d'arcs électriques entre le cadre et la spire, détériorant gravement les caractéristiques de transfert de courant entre le cadre et la spire. En outre, la complexité mécanique de l'assemblage spire / cadre rend ce dispositif très couteux au regard de son efficacité.

L'invention vise donc à fournir un procédé permettant de fixer une spire conductrice dans un cadre formé d'un matériau différent qui ne présente pas les inconvénients de la technique antérieure.

L'invention vise encore un procédé qui ne soit pas limité à la fixation d'une spire conductrice dans un cadre mais qui puisse être étendu à la fixation d'une bague en métal quelconque dans un cadre, par exemple pour la réalisation de paliers lisses.

L'invention vise de plus à fournir un tel procédé qui permette de résoudre des contraintes divergentes et antagonistes entre les exigences électriques, mécaniques, économiques, telles que le besoin d'employer des métaux à forte conductivité électrique, qui sont en général ductiles et coûteux dans des assemblages qui doivent être rigides et économiques.

L'invention vise également un tel procédé qui soit économique pour sa mise en oeuvre.

L'invention vise en outre à fournir une bobine d'induction adaptée pour une utilisation dans un procédé de magnétoformage, qui présente des performances accrues tant en durée de vie qu'en terme de champ magnétique atteint.

L'invention vise encore à fournir une bobine d'induction qui est fiable et durable et qui peut être facilement reconditionnée en cas d'usure ou de changement d'application.

Pour ce faire, l'invention concerne un procédé de fixation d'une bague métallique dans un cadre d'un métal différent, dans lequel :
- on réalise à distance des bords du cadre un alésage traversant une épaisseur de celui-ci et présentant un diamètre intérieur prédéterminé ;
- on insère dans l'alésage une bague métallique de diamètre extérieur correspondant au diamètre intérieur de l'alésage et de largeur inférieure ou égale à l'épaisseur du cadre ;
- on sertit la bague dans l'alésage au moyen d'un formage à haute énergie adapté pour plaquer une face extérieure de la bague contre l'alésage avec une vitesse de déformation supérieure à 15 m/s propre à chasser toute impureté d'une interface entre la bague et le cadre ;
- on chauffe l'interface entre la bague et le cadre à une température et pendant une durée déterminées en fonction des matériaux respectifs de la bague et du cadre de manière à obtenir une soudure par diffusion entre la face extérieure de la bague et l'alésage.

Dans tout le texte, on désigne par "formage à haute énergie" tout procédé permettant de créer une déformation plastique d'une pièce métallique sur un moule ou une autre pièce avec une vitesse de déformation supérieure à 15 m/s. Une telle déformation génère des contraintes très supérieures à la limite élastique de la pièce et dirigées principalement orthogonalement à la surface de la pièce, selon l'épaisseur de celle-ci. Cette contrainte vient réduire les contraintes longitudinales parallèles à la surface entraînées par la déformation de la pièce dans le moule. Cette réduction des contraintes longitudinales permet de compenser le retour élastique longitudinal. Dès lors, un retour élastique éventuel s'effectue dans la direction de l'épaisseur de la pièce et n'entraîne que très peu de déformations lorsque la contrainte cesse d'être appliquée. De même on désigne par "soudure par diffusion" un assemblage entre deux matériaux obtenu par diffusion en phase solide des atomes de l'un dans l'autre et réciproquement, même si les matériaux sont différents, le terme brasage par diffusion étant réservé aux assemblages dans lesquels il y a formation d'une phase liquide à l'interface des deux matériaux.

Grace à ce procédé combinant un sertissage par formage à haute énergie de la bague dans l'alésage du cadre avec une soudure par diffusion de la matière de la bague dans celle de l'alésage du cadre, il est possible d'obtenir un joint continu entre deux matériaux hétérogènes, qui ne présente pas d'entrefer entre la bague et l'alésage et permet d'assurer une continuité électrique parfaite entre le cadre et la bague. La bague peut être ainsi montée initialement avec un jeu permettant son insertion à la main dans l'alésage, donc avec un entrefer cadre / bague non négligeable. Une fois la bague positionnée dans l'alésage, on applique un formage à haute énergie, par exemple un magnétoformage en expansion, en plaçant de manière sensiblement coaxiale à l'intérieur de la bague une bobine de magnétoformage par expansion qui génère une force radiale sur la bague avec une très grande énergie, entrainant une déformation de la bague propre à plaquer sa face externe sur la face interne de l'alésage à une très grande vitesse de déformation, en particulier une vitesse supérieure à 15 m/s. Dès lors, la vitesse d'accostage de la face externe de la bague sur la face interne de l'alésage est telle que l'air existant entre ces deux surfaces est chassé en un jet entrainant toutes les impuretés et tous les contaminants pouvant exister sur ces surfaces. Le joint ainsi obtenu présente un contact intime entre la matière de la bague et celle de l'alésage et ce sur toute la surface de contact entre la bague et l'alésage. Grâce à ce contact très étroit, un chauffage approprié de la bague montée dans l'alésage, à une température comprise entre 50% et 90% de la température de fusion du matériau de la bague entraine une diffusion des atomes de la matière de celle-ci dans la matière de l'alésage formant ainsi un joint de soudure quasi parfait. Ainsi, malgré des matériaux dissemblables, on obtient une fixation de la bague dans le cadre ne présentant aucun interstice ou aucun entrefer susceptible de détériorer des caractéristiques de transfert de courant entre le cadre et la bague.

Avantageusement et selon l'invention, le formage à haute énergie est choisi parmi les procédés de magnétoformage, d'électro hydroformage ou de formage par explosion. Ces trois procédés sont sensiblement équivalents en matière de transfert d'énergie et permettent de conférer à la bague une déformation à très haute vitesse, notamment supérieure à 15 m/s, propre à assurer le contact intime entre la face externe de la bague et la face interne de l'alésage pour permettre ultérieurement le soudage par diffusion entre ces deux surfaces. Par exemple, il est possible d'obtenir de telles vitesses de déformation en employant une énergie de l'ordre de 10 à 100 kJ en magnétoformage ou supérieure à 100kJ en électro hydro formage.

Avantageusement et selon l'invention, le chauffage de l'interface entre la bague et le cadre est réalisé par induction. Le chauffage par induction est le procédé préférentiel compte tenu de sa rapidité et des économies d'énergie qu'il permet. Grâce à ce procédé, on génère un échauffement par effet Joule dans la bague et dans le cadre et particulièrement à l'interface entre les deux matériaux en choisissant la fréquence et la valeur du champ électromagnétique en fonction des matériaux et de la forme des pièces à chauffer. Bien entendu, d'autres procédés de chauffage peuvent être employés au prix de durées de chauffe supérieures (jusqu'à plusieurs heures pour une diffusion cuivre / acier pour un chauffage sous contrainte isostatique et sous vide classique à comparer avec quelques dizaines de secondes pour un chauffage à induction).

Avantageusement et selon l'invention, le procédé est appliqué à la réalisation d'une bobine d'induction pour magnétoformage caractérisé en ce qu'on utilise une bague en métal présentant une conductivité électrique supérieure à 30.10⁶ S.m⁻¹ et un cadre en matériau rigide présentant un module de Young supérieur à 200 GPa. Dans le cas de la réalisation d'une bobine pour magnétoformage, la bague qui forme la spire conductrice doit être dans un matériau permettant la conduction de courants très intenses, de l'ordre de dizaines voire de centaines de kilo Ampères. Cependant, les matériaux présentant une telle conductivité sont en général peu résistants et pourraient être détruits par les forces développées lors du magnétoformage s'ils ne sont pas adossés à un cadre suffisamment rigide.

Avantageusement et selon l'invention, on utilise une bague en cuivre d'une épaisseur comprise entre 2 et 10 mm et préférentiellement entre 2 et 5 mm et un cadre en acier. Ainsi pour une bobine de magnétoformage présentant un diamètre intérieur de l'ordre de 50 mm, une bague de 5 à 10 mm de large sur quelques millimètres d'épaisseur est suffisante compte tenu de la durée des impulsions de courant qui la traversent. En effet, dans ce cas, le courant circule dans la périphérie du conducteur (effet de peau) et une épaisseur supérieure ne présente pas un rapport efficacité / coût recherché.

Avantageusement et selon l'invention, on découpe une fente radiale traversant la bague et le cadre de manière à définir un chemin électrique faisant le tour de la bague d'un côté à l'autre de la fente. Afin de transformer la bague sertie dans son cadre en une spire conductrice, la bague et son cadre sont ouverts selon une fente radiale par un trait de scie, par exemple par une scie à fil ménageant une fente de l'ordre de 2 mm pour un diamètre de spire de 50 mm. Grâce à la combinaison sertissage et soudage de la bague dans le cadre, la réalisation de cette fente n'entraine pas la séparation de la bague comme ce pourrait être le cas pour un sertissage seul.

L'invention s'étend également à une bobine d'induction mono spire, notamment pour magnétoformage, comportant :
- un cadre rigide d'un matériau présentant un module d'Young supérieur à 200GPa, ledit cadre comportant un alésage central ;
- une spire en matériau conducteur présentant une conductivité supérieure à 30.10⁶ S.m⁻¹ sertie et soudée par diffusion à l'intérieur dudit alésage central ;
- une fente radiale traversant le cadre et définissant les extrémités de la spire.

En particulier, la bobine comporte une spire en cuivre sertie par formage à haute énergie et soudée par diffusion dans un cadre en acier, le début et la fin de la spire étant définis par les côtés de la fente qui divise le cadre du centre de l'alésage central jusqu'à l'un de ses bords. La bobine présente ainsi l'avantage d'avoir une continuité électrique parfaite entre la face extérieure de la spire en cuivre et la paroi interne de l'alésage ménagé dans le cadre ce qui permet d'éviter des arcs électriques entre le cadre et la spire en cuivre.

Avantageusement et selon l'invention, le cadre comporte de chaque côté de la fente un pied de fixation électriquement connecté au cadre et adapté pour être relié à une borne d'un générateur d'impulsions de courant. Les pieds de fixation s'étendent orthogonalement au plan du cadre et comportent des trous de fixation permettant de les brider sur un support de manière à éviter que les efforts exercés sur la bobine et le cadre ne tendent à agrandir la fente. De plus, les pieds de fixation comportent des moyens de connexion aux bornes d'un générateur d'impulsions de courant. Le courant électrique circule ainsi dans la bobine en entrant par l'un des pieds de fixation, passe par la partie du cadre en acier connectée au pied de fixation puis circule dans la spire en cuivre jusqu'à l'autre extrémité du cadre, de l'autre côté de la fente et retourne au générateur par l'autre pied de fixation. La circulation du courant dans la spire de cuivre génère un champ magnétique variable de forte intensité permettant d'exercer un effort de striction sur une pièce conductrice placée au centre de la spire.

Avantageusement et selon l'invention, chaque pied de fixation est soudé respectivement à une partie du cadre, de part et d'autre de la fente. Afin d'améliorer la conduction entre les pieds de fixation et le cadre, les pieds sont directement soudés, par exemple par une soudure autogène, sur le cadre.

L'invention concerne également un procédé de fixation d'une bague dans un cadre et une bobine mono spire caractérisés en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente les étapes du procédé selon l'invention ;
- la figure 2 est une vue en perspective d'une bobine de magnétoformage obtenue par le procédé selon l'invention ; et
- la figure 3 est une vue en coupe d'une bobine de magnétoformage obtenue par le procédé selon l'invention.

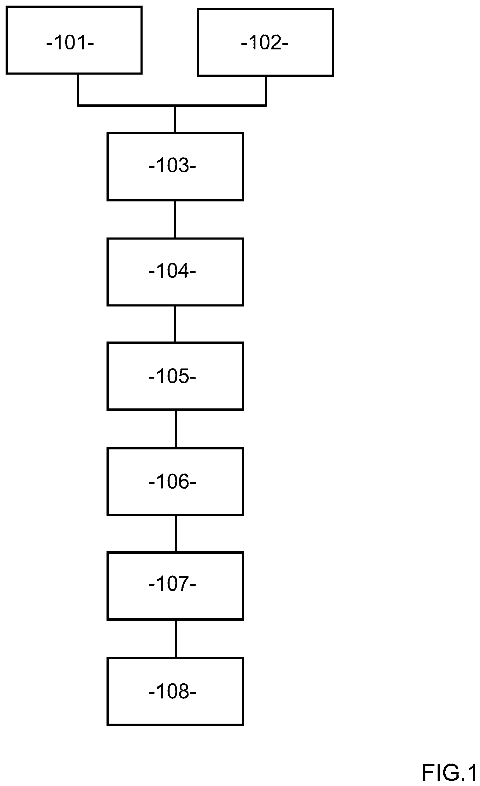

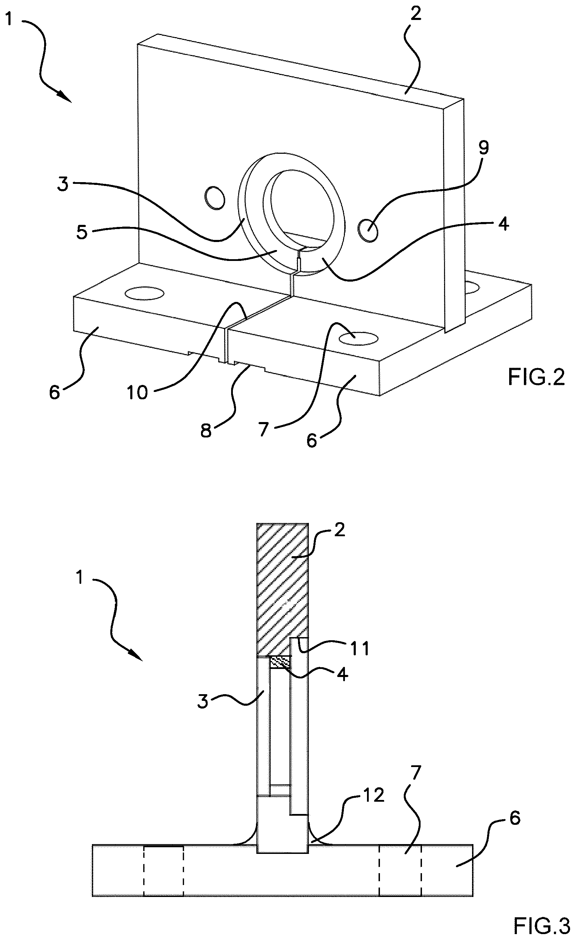

Dans la description qui va suivre on se réfère à la figure 1 pour décrire les étapes du procédé et aux figures 2 et 3 pour l'identification des pièces.

À l'étape 101 (figure 1), on prépare un cadre 2 métallique, de préférence en acier, qui dans l'exemple représenté aux figures 2 et 3 est une plaque d'acier d'environ 150 mm de haut pour 200 mm de long et 20 mm d'épaisseur. Bien entendu, le cadre 2 n'a pas nécessairement une forme rectangulaire mais peut aussi adopter une forme circulaire, semi-circulaire ou autre. Dans cette étape, on réalise un alésage 3 d'axe orthogonal à la face principale du cadre 2, sensiblement au centre de la plaque. Les tailles du cadre 2 et de l'alésage 3 sont choisies en fonction de la taille de la bague qui va être installée dans le cadre pour former ultérieurement une bobine d'induction. Dans l'exemple représenté, l'alésage réalisé présente un diamètre de l'ordre de 60 mm.

Parallèlement à la préparation du cadre, on prépare à l'étape 102 une bague 4 cylindrique en cuivre ou autre matériau présentant une conductivité élevée, par exemple supérieure à 30.10⁶ S.m⁻¹, comme l'or, l'argent, l'aluminium, le béryllium, etc. La bague 4 présente un diamètre extérieur correspondant au diamètre de l'alésage 3, moyennant un jeu positif, par exemple de quelques dixièmes ou centièmes de millimètre, permettant d'insérer la bague dans l'alésage sans devoir utiliser de presse ou autres outils susceptibles de détériorer l'état de surface de l'alésage ou de la face externe de la bague. La bague 4 présente une largeur du même ordre de grandeur que l'épaisseur du cadre 2. Il est possible de prévoir que la largeur de la bague soit inférieure à l'épaisseur du cadre de manière à ménager un décrochement entre le flanc de la bague et le bord de l'alésage, par exemple pour centrer d'éventuels outillages ultérieurement ou encore pour définir une zone de formage plus étroite que l'épaisseur du cadre.

La bague 4 présente une épaisseur de paroi de l'ordre de 2 à 10 mm et préférentiellement de 2 à 5 mm en fonction de l'intensité des courants électriques susceptibles de la parcourir comme on le verra par la suite.

À l'étape 103, on insère la bague 4 dans l'alésage 3. À ce stade, la bague 4 est maintenue dans l'alésage par frottement. On installe alors le cadre et la bague dans un appareil de formage à haute énergie tel qu'un appareil de magnétoformage par expansion en installant à l'intérieur de la bague 4 une bobine de magnétoformage en vue de sertir la bague dans l'alésage. On applique alors à cette bobine une impulsion de courant dont les caractéristiques sont établies en fonction de la nature des matériaux et des dimensions des pièces.

À titre d'exemple, pour un sertissage d'une bague en cuivre de 5 mm d'épaisseur pour un diamètre extérieur de 60 mm dans un alésage de 60 mm ménagé dans un cadre en acier, on utilise une bobine alimentée par une impulsion électrique sous 20 kV développant une énergie de l'ordre de 40kJ pendant une durée de l'ordre de 50 µs. Dans ce cas, la bague de cuivre se déforme à une vitesse pouvant atteindre 200 m/s et développe à l'interface bague / alésage une pression de l'ordre de 40 MPa.

Alternativement, d'autres techniques de formage à haute énergie peuvent être employées comme par exemple l'électro hydroformage dans lequel le cadre et la bague sont disposés dans une cuve remplie d'eau et une décharge électrique à très haute énergie entre des électrodes placées au voisinage du centre de la bague génère une onde de choc s'étendant radialement et plaquant la face externe de la bague contre la paroi de l'alésage. De même, la technique du formage par explosion peut également être employée.

Dans tous les cas, lors du formage, la bague 4 est déformée radialement et sa face externe est plaquée contre la paroi de l'alésage avec une vitesse supérieure ou égale à 15 m/s. À cette vitesse, l'air résiduel restant entre la bague et l'alésage est chassé sous forme de jet, entraînant avec lui les éventuelles impuretés ou contaminants (pollution, oxydes, etc.) qui auraient été présents entre les deux surfaces. En outre, les deux surfaces en regard de la bague et du cadre subissent une intense déformation plastique qui crée une série de micro ondulations de la surface de contact permettant ainsi un contact intime entre les deux surfaces.

À l'étape 104, on réalise un soudage par diffusion entre la face externe de la bague et la paroi interne de l'alésage. Grâce au contact étroit et à la contrainte résiduelle de compression entre la face externe de la bague et la paroi interne de l'alésage obtenus au cours de l'étape précédente, on a réalisé une interface initiale entre les deux matériaux de la bague et du cadre propre à la réalisation d'une soudure par diffusion atomique des deux matériaux l'un dans l'autre. À cette fin, on chauffe cette interface à une température élevée, de l'ordre de 50% à 90% de la température de fusion des matériaux en présence. Par exemple, dans le cas d'une bague en cuivre dans un cadre en acier, on vise une température de l'ordre de 800°C au niveau de l'interface pendant une durée de quelques dizaines de secondes à quelques minutes.

Pour ce faire, on prévoit un chauffage par induction de l'interface cuivre / acier en introduisant à l'intérieur de la bague 4 une bobine électromagnétique propre à générer un champ électromagnétique variable. Les courants de Foucault générés dans le métal de la bague et plus particulièrement dans le cadre au voisinage de l'alésage créent une élévation de température au niveau du joint permettant la diffusion des atomes de la bague vers l'alésage et réciproquement. Les paramètres des conditions opératoires de cette étape peuvent être vérifiés et ajustés en observant la profondeur de diffusion qui doit être de l'ordre de un à quelques microns.

À l'issue de l'étape 104, on obtient ainsi une bague doublement fixée par sertissage et soudage dans le cadre.

Cependant, dans le cas particulier de la réalisation d'une bobine pour magnétoformage, il convient de matérialiser un chemin de courant à l'intérieur de la bobine et pour cela de transformer la bague fixée dans le cadre en une spire 5 de la bobine.

Pour cela, à l'étape 105, on réalise une fente 10 radiale, par exemple par sciage, à partir de l'intérieur de la bague 4 et traversant complètement le cadre 2 de manière à créer une discontinuité électrique de part et d'autre de la fente. De ce fait, un courant électrique entrant par un côté de la fente 10 et sortant par l'autre côté doit nécessairement emprunter un chemin faisant le tour de l'alésage et de la bague 4 qui forme ainsi une spire 5. Dans l'exemple précédemment cité, pour une bague de 60 mm de diamètre extérieur, on prévoit une fente de l'ordre de 2 mm de large.

Il est à noter que la réalisation d'une telle fente 10 n'est possible que grâce à la soudure par diffusion réalisée à l'étape 104, elle-même rendue possible par le sertissage de l'étape 103. En effet, en l'absence de cette soudure, il est possible que le déséquilibre introduit par la fente 10 dans les contraintes radiales qui s'exercent entre la bague 4 et l'alésage entraîne une désolidarisation entre la bague et l'alésage. Une telle désolidarisation (même partielle) générerait alors un ou plusieurs entrefers entre le cadre 2 et la spire 5 avec pour conséquence une perte d'efficacité et de fiabilité de la bobine.

Pour compléter la réalisation de la bobine 1 de magnétoformage, on réalise à l'étape 106 une série d'usinages, comme par exemple un lamage 11 dans le cadre 2, concentrique à la bague 4 et à l'alésage 3, ainsi que deux trous 9 de fixation permettant de centrer et de fixer un outillage de guidage des pièces à former par rapport à la bobine 1.

De même, à l'étape 107, on fixe au cadre 2 des pieds 6 de part et d'autre de la fente 10. Ces pieds peuvent être fixés par tout moyen, mais préférentiellement ils sont soudés au cadre par une soudure autogène 12 afin de garantir une conductivité électrique entre les pieds et chaque côté de la spire 5.

Les pieds 6 comportent en outre des trous de bridage 7 permettant de fixer la bobine 1 sur un plateau de magnétoformage (non représenté) de manière à limiter la transmission d'efforts visant à écarter les pieds et élargir la fente 10 lors des opérations de magnétoformage dans lesquelles la bobine 1 est utilisée. De même, les pieds 6 comportent, de part et d'autre de la fente 10 et sur leur face opposée au cadre 2, des gorges 8 adaptées pour recevoir des bornes de connexion de la bobine 1 aux électrodes du générateur d'impulsions.

La bobine 1 est enfin complétée à l'étape 108 au cours de laquelle on installe une feuille isolante entre les parois de la fente 10 pour éviter un arc éventuel entre les deux extrémités du circuit électrique. La feuille isolante est préférentiellement une feuille de matériau synthétique, notamment en polypropylène, présentant des caractéristiques diélectriques appropriées aux impulsions de courant utilisées. Il n'est par ailleurs pas exclu que la feuille isolante soit réalisée par surmoulage de la bobine 1.

Bien entendu, la séquence des opérations 105 à 108 n'est pas nécessairement réalisée dans cet ordre. Ainsi, il peut être préférable de souder au cadre un pied unique avant de réaliser la fente 10 qui s'étendra alors au travers de ce pied ou encore de réaliser les usinages de l'étape 106 avant de réaliser la fente 10.

Bien entendu, les opérations 101 à 104 qui définissent le procédé de fixation d'une bague dans un cadre peuvent être utilisées aux fins de réaliser d'autres objets qu'une bobine de magnétoformage. Par exemple, le procédé de fixation d'une bague métallique dans un cadre d'un métal différent peut être utilisé pour la réalisation de paliers de rotation comme par exemple des coussinets de bielle ou autres applications.

## Revendications

1. Procédé de fixation d'une bague (4) métallique dans un cadre (2) d'un métal différent, dans lequel :
- on réalise à distance des bords du cadre (2) un alésage (3) traversant une épaisseur de celui-ci et présentant un diamètre intérieur prédéterminé ;
- on insère dans l'alésage (3) une bague (4) métallique de diamètre extérieur correspondant au diamètre intérieur de l'alésage et de largeur inférieure ou égale à l'épaisseur du cadre (2) ;
- on sertit la bague (4) dans l'alésage au moyen d'un formage à haute énergie adapté pour plaquer une face extérieure de la bague contre l'alésage (3) avec une vitesse de déformation supérieure à 15 m/s propre à chasser toute impureté d'une interface entre la bague et le cadre ;
- on chauffe l'interface entre la bague (4) et le cadre (2) à une température et pendant une durée déterminées en fonction des matériaux respectifs de la bague et du cadre de manière à obtenir une soudure par diffusion entre la face extérieure de la bague et l'alésage.

2. Procédé selon la revendication 1, **caractérisé en ce que** le formage à haute énergie est choisi parmi les procédés de magnétoformage, d'électro hydroformage ou de formage par explosion.

3. Procédé selon l'une des revendications 1 ou 2, **caractérisé en ce que** le chauffage de l'interface entre la bague (4) et le cadre (2) est réalisé par induction.

4. Procédé selon l'une quelconque des revendications 1 à 3, appliqué à la réalisation d'une bobine d'induction pour magnétoformage, **caractérisé en ce qu'**on utilise une bague en métal présentant une conductivité électrique supérieure à 30.10⁶ S.m⁻¹ et un cadre en matériau rigide présentant un module de Young supérieur à 200 GPa.

5. Procédé selon la revendication 4, **caractérisé en ce qu'**on utilise une bague en cuivre d'une épaisseur comprise entre 2 et 10 mm et préférentiellement entre 2 et 5 mm.

6. Procédé selon l'une des revendications 4 ou 5, **caractérisé en ce que** qu'on utilise un cadre en acier.

7. Procédé selon l'une des revendications 4 à 6, **caractérisé en ce qu'**on découpe une fente (10) radiale traversant la bague (4) et le cadre (2) de manière à définir un chemin électrique faisant le tour de la bague d'un côté à l'autre de la fente.

8. Bobine (1) d'induction mono spire, notamment pour magnétoformage, comportant :
- un cadre (2) rigide d'un matériau présentant un module d'Young supérieur à 200GPa, ledit cadre comportant un alésage (3) central ;
- une spire (5) en matériau conducteur présentant une conductivité supérieure à 30.10⁶ S.m⁻¹ sertie et soudée par diffusion à l'intérieur dudit alésage central ;
- une fente (10) radiale traversant le cadre (2) et définissant les extrémités de la spire (5).

9. Bobine selon la revendication 8, **caractérisé en ce que** le cadre comporte de chaque côté de la fente (10) un pied (6) de fixation électriquement connecté au cadre et adapté pour être relié à une borne d'un générateur d'impulsions de courant.

10. Bobine selon la revendication 9, **caractérisé en ce que** chaque pied (6) de fixation est soudé (12) respectivement à une partie du cadre, de part et d'autre de la fente (10).

## Patentansprüche

1. Verfahren zum Befestigen eines metallischen Rings (4) in einem Rahmen (2) eines verschiedenen Metalls, wobei:
- in einem Abstand von den Rändern des Rahmens (2) eine Bohrung (3) durchgeführt wird, die eine Dicke desselben durchquert und einen vorbestimmten Innendurchmesser aufweist;
- in die Bohrung (3) ein metallischer Ring (4) mit einem Außendurchmesser, der dem Innendurchmesser der Bohrung entspricht, und einer Breite, die geringer oder gleich der Dicke des Rahmens (2) ist, eingeführt wird;
- der Ring (4) in die Bohrung mit Hilfe einer Hochenergieformung eingearbeitet wird, die ausgelegt ist, um eine Außenseite des Rings gegen die Bohrung (3) mit einer Verformungsgeschwindigkeit von mehr als 15 m/s zu drücken, die geeignet ist, um jede Verunreinigung von einer Schnittstelle zwischen dem Ring und dem Rahmen zu entfernen;
- die Schnittstelle zwischen dem Ring (4) und dem Rahmen (2) auf eine vorbestimmte Temperatur und während einer vorbestimmten Dauer je nach den entsprechenden Materialien des Rings und des Rahmens erhitzt wird, um eine Schweißung durch Diffusion zwischen der Außenseite des Rings und der Bohrung zu erhalten.

2. Verfahren nach Anspruch 1, **dadurch gekennzeichnet, dass** die Hochenergieformung ausgewählt ist aus den Verfahren der Magnetformung, der Elektrohydroformung oder der Formung durch Explosion.

3. Verfahren nach einem der Ansprüche 1 oder 2, **dadurch gekennzeichnet, dass** die Erhitzung der Schnittstelle zwischen dem Ring (4) und dem Rahmen (2) durch Induktion durchgeführt wird.

4. Verfahren nach einem der Ansprüche 1 bis 3, angewendet auf die Durchführung einer Induktionsspule zur Magnetformung, **dadurch gekennzeichnet, dass** ein Ring aus Metall verwendet wird, der eine elektrische Leitfähigkeit von mehr als 30.10⁶ S.m⁻¹ aufweist, und ein Rahmen aus starrem Material, der ein Young-Modul von mehr als 200 Gpa aufweist.

5. Verfahren nach Anspruch 4, **dadurch gekennzeichnet, dass** ein Ring aus Kupfer mit einer Dicke verwendet wird, die zwischen 2 und 10 mm und vorzugsweise zwischen 2 und 5 mm liegt.

6. Verfahren nach einem der Ansprüche 4 oder 5, **dadurch gekennzeichnet, dass** ein Rahmen aus Stahl verwendet wird.

7. Verfahren nach einem der Ansprüche 4 bis 6, **dadurch gekennzeichnet, dass** ein radialer Schlitz (10) geschnitten wird, der den Ring (4) und den Rahmen (2) durchquert, um einen Stromweg zu definieren, der um den Ring von einer Seite zur anderen des Schlitzes verläuft.

8. Einwindige Induktionsspule (1), insbesondere zur Magnetformung, umfassend:
- einen starren Rahmen (2) aus einem Material, das ein Young-Modul von mehr als 200 Gpa aufweist, wobei der Rahmen eine zentrale Bohrung (3) umfasst;
- eine Windung (5) aus leitfähigem Material, die eine Leitfähigkeit von mehr als 30.10⁶ S.m⁻¹ aufweist, eingearbeitet und diffusionsgeschweißt im Inneren der zentralen Bohrung;
- einen radialen Schlitz (10), der den Rahmen (2) durchquert und die Enden der Windung (5) definiert.

9. Spule nach Anspruch 8, **dadurch gekennzeichnet, dass** der Rahmen auf jeder Seite des Schlitzes (10) einen Befestigungsfuß (6) umfasst, der elektrisch mit dem Rahmen verbunden und ausgelegt ist, um mit einer Klemme eines Stromimpulsgenerators verbunden zu sein.

10. Spule nach Anspruch 9, **dadurch gekennzeichnet, dass** jeder Befestigungsfuß (6) jeweils an einen Teil des Rahmens auf beiden Seiten des Schlitzes (10) geschweißt (12) ist.

## Claims

1. Method for attaching a metal ring (4) in a frame (2) of a different metal, wherein:
- at a distance from edges of the frame (2) a bore (3) is made passing through a thickness of the latter and having a predetermined inner diameter;
- into the bore (3) is inserted a metal ring (4) with an outer diameter that corresponds to the inner diameter of the bore and with a width less than or equal to the thickness of the frame (2);
- the ring (4) is crimped in the bore by means of high-energy forming suitable for urging an outer surface of the ring against the bore (3) with a deformation speed greater than 15 m/s able to drive out any impurity from an interface between the ring and the frame;
- the interface between the ring (4) and the frame (2) is heated to a temperature and for a determined duration according to the respective materials of the ring and of the frame in such a way as to obtain a diffusion welding between the outer face of the ring and the bore.

2. Method according to claim 1, **characterised in that** the high-energy forming is chosen from the methods of magnetic forming, electro hydroforming or forming via explosion.

3. Method according to one of claims 1 or 2, **characterised in that** the heating of the interface between the ring (4) and the frame (2) is carried out via induction.

4. Method according to any of claims 1 to 3, applied to the production of an induction coil for magnetic forming, **characterised in that** a metal ring having an electrical conductivity greater than 30.10⁶ S.m⁻¹ and a frame made of rigid material having a Young's modulus greater than 200 GPa are used.

5. Method according to claim 4, **characterised in that** a copper ring with a thickness between 2 and 10 mm and preferentially between 2 and 5 mm is used.

6. Method according to one of claims 4 or 5, **characterised in that** a steel frame is used.

7. Method according to one of claims 4 to 6, **characterised in that** a radial slot (10) passing through the ring (4) and the frame (2) is cut in such a way as to define an electrical path going around the ring from one side to the other of the slot.

8. Single-turn induction coil (1), in particular for magnetic forming, comprising:
- a rigid frame (2) made of a material having a Young's modulus greater than 200 GPa, said frame comprising a central bore (3);
- a turn (5) made of a conductive material having a conductivity greater than 30.10⁶ S.m⁻¹ crimped and welded by diffusion inside said central bore;
- a radial slot (10) passing through the frame (2) and defining the ends of the turn (5).

9. Coil according to claim 8, **characterised in that** the frame comprises on each side of the slot (10) a fastening foot (6) electrically connected to the frame and suitable for being connected to a terminal of a current pulse generator.

10. Coil according to claim 9, **characterised in that** each fastening foot (6) is welded (12) respectively to a portion of the frame, on either side of the slot (10).
